# EUROPÄISCHE PATENTSCHRIFT

(11) **EP 3 617 831 B1**
(45) Veröffentlichungstag und Bekanntmachung des Hinweises auf die Patenterteilung: **06.04.2022**
(21) Anmeldenummer: 19193675.6
(22) Anmeldetag: 27.08.2019
(51) Int. Cl.: G05D 1/02

(54) **VERFAHREN, VORRICHTUNG UND VERWALTUNGSSYSTEM ZUM PRÜFEN EINER ROUTE FÜR EIN MOBILES TECHNISCHES SYSTEM IN EINEM BAUWERK**
METHOD, DEVICE AND MANAGEMENT SYSTEM FOR TESTING A ROUTE FOR A MOBILE TECHNICAL SYSTEM IN A BUILDING
PROCÉDÉ, DISPOSITIF ET SYSTÈME DE GESTION PERMETTANT DE VÉRIFIER UNE ROUTE POUR UN SYSTÈME TECHNIQUE MOBILE DANS UNE CONSTRUCTION

(30) Priorität: 03.09.2018 DE 102018214927
(43) Veröffentlichungstag der Anmeldung: 04.03.2020
(73) Patentinhaber: Siemens Schweiz AG, 8047 Zürich (CH)
(72) Erfinder: Frey, Christian, 6314 Unterägeri (CH); Klein, Wolfram, 85579 Neubiberg (DE); Mayer, Hermann Georg, 83209 Prien am Chiemsee (DE)
(74) Vertreter: Maier, Daniel Oliver

(56) Entgegenhaltungen:
- EP-A1- 2 806 324
- US-A1- 2014 032 179

## Beschreibung

Die Erfindung betrifft ein computerimplementiertes Verfahren und eine Vorrichtung zum Prüfen einer Route für ein mobiles technisches System in einem Bauwerk. Ferner betrifft die Erfindung ein Verwaltungssystem eines Bauwerks, ein Computerprogrammprodukt und ein computerlesbares Speichermedium.

In Bauwerken, wie z.B. Produktionsanlagen, Industrieanlagen, Krankenhäusern, Flughäfen oder ähnlichem, werden zunehmend für den Betrieb, Service und/oder die Logistik mobile technische Systeme, wie z.B. Transportsysteme, eingesetzt. Diese mobilen Systeme können sowohl vom Menschen geführt bzw. mittels eines Steuergeräts gesteuert werden als auch autonom konzipiert sein. Es ist dabei bekannt, mittels beispielsweise Pfadplanungs- und/oder Optimierungsalgorithmen Pfade für ein mobiles System in einem Bauwerk zu ermitteln. Bei der Pfadplanung werden in der Regel lediglich Randbedingungen des Bauwerks, wie z.B. Wände oder Durchgänge, berücksichtigt.

Weiter ist bekannt, für ein Bauwerk zur Vorhersage und Überprüfung bestimmter Merkmale und zur Entscheidungsunterstützung ein Simulationsmodell mittels Bauwerksdatenmodellierung (engl. Building Information Modelling, kurz BIM), bereitzustellen. Ein Simulationsmodell kann insbesondere Informationen über technische Daten und/oder Statik des Bauwerks umfassen. Anhand eines solchen Simulationsmodells kann beispielsweise für eine statische Installation im Bauwerk eine Simulation durchgeführt werden. In der Regel können ein Simulationsmodell und/oder Sensordaten eines Bauwerks mittels eines Gebäudemanagementsystems verwaltet werden.

Aus EP 2806324 A1 ein Verfahren zur Pfadplanung für die Bewegung eines Objekts in einem Gebäude bekannt, wobei räumliche Daten des Gebäudes und eine Stellung des Objekts berücksichtigt werden, so dass eine Kollision zwischen dem Objekt und einer Gebäudestruktur vermieden wird.

Aus US2014/0032179A1 ist ein Verfahren zur Identifizierung von Pfaden in einem Gebäude für bewegliches Equipment bekannt. Dabei werden Pfade für das Equipment identifiziert, die, unter Berücksichtigung der Dimensionen des Equipments, ein Umfahren von Gebäudeobjekten erlauben.

Es ist eine Aufgabe der Erfindung, eine Route eines mobilen technischen Systems in einem Bauwerk auf Eignung für das mobile technische System zu prüfen.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung ein computerimplementiertes Verfahren zum Prüfen einer Route in einem Bauwerk für ein mobiles technisches System, wobei
- ein computergestütztes räumliches Modell des Bauwerks, das Bauwerksdaten umfasst, eine Route für das mobile technische System im Bauwerk und Parameter des mobilen technischen Systems eingelesen werden,
- abhängig von den Parametern eine Randbedingung für die Route abgeleitet wird,
- für einen vorgegebenen Punkt der Route anhand des Modells des Bauwerks geprüft wird, ob die Bauwerksdaten die Randbedingung am vorgegebenen Punkt der Route erfüllen
   und
- ein Ergebnis der Prüfung ausgegeben wird.

Ein mobiles technisches System ist insbesondere bewegbar bzw. fahrbar und kann beispielsweise ein fahrbares Transportsystem, ein mobiler Roboter, oder ein Fahrzeug sein, das autonom konfiguriert ist oder von einem Menschen bewegt bzw. gesteuert werden kann. Parameter eines mobilen technischen Systems können insbesondere technische und physikalische Parameter sein, wie z.B. Ausmaße, Gewicht, Hitzebeständigkeit, Wendekreisradius und ähnliches. Des Weiteren können die Parameter des mobilen technischen Systems auch Informationen über eine Ladung, wie z.B. Sperrigkeit oder besondere Anforderungen an den Transportweg, umfassen.

Sofern es in der nachfolgenden Beschreibung nicht anders angegeben ist, beziehen sich die Begriffe "ermitteln", "durchführen", "bereitstellen", "erfolgen", "berechnen", "rechnergestützt", "rechnen", "feststellen", "generieren", "konfigurieren", "rekonstruieren" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können. Insbesondere können Daten eines Modells eines Bauwerks, einer Route und/oder Parameter des mobilen technischen Systems auf eine Speichereinheit gespeichert sein und/oder eingelesen werden. Eine "Route" für ein mobiles technisches System ist insbesondere eine Angabe über einen zu folgenden Weg oder Pfad, wobei mindestens ein Startpunkt und ein Endpunkt angegeben ist. Eine Route kann in einer Datenstruktur gespeichert sein. Eine Route kann beispielsweise mittels eines Pfadplanungsalgorithmus für das Bauwerk ermittelt oder von einem Nutzer vorgegeben sein.

Ein computergestütztes räumliches Modell eines Bauwerks, im Folgenden auch als Bauwerksmodell bezeichnet, kann insbesondere physikalische und/oder technische und/oder funktionale Bauwerksdaten umfassen bzw. modellieren. Ein Modell eines Bauwerks kann ein digitales, dreidimensionales Simulationsmodell sein, welches insbesondere physikalische Größen und technische Merkmale des Bauwerks abbildet. Beispielsweise kann ein Modell eines Bauwerks einen Grundriss, Maße, Informationen zur Statik und/oder zu Baumaterialien umfassen. Beispielsweise kann mittels des Verfahrens überprüft werden, ob an einem Ortspunkt einer Route ein Tragwerk des Bauwerks für das Gewicht des mobilen technischen Systems geeignet ist. Dazu kann insbesondere eine computergestützte Simulation der Route im Bauwerk durchgeführt werden.

Die Bauwerksdaten können insbesondere physikalische und/oder technische und/oder funktionale Daten des Bauwerks sein, wie z.B. Daten zu Größe, Material, oder Belastbarkeit von Bauwerksteilen sowie Informationen zum Bauwerkspläne und funktionale Details.

Unter "computergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Eine Randbedingung kann insbesondere als eine Anforderung gesehen werden, die einen Lösungsraum jenseits dessen einschränkt, was notwendig ist, um funktionale Anforderungen und/oder Qualitätsanforderungen zu erfüllen. Die Randbedingung kann insbesondere anhand der Parameter des mobilen technischen Systems abgeleitet, d.h. beispielsweise berechnet oder simuliert, werden.

Es ist ein Vorteil der Erfindung, dass vorgegebene Routen bzw. vorgegebene Punkte, d.h. Ortspunkte, einer Route in einem Bauwerk für ein mobiles technisches System anhand eines Modells des Bauwerks auf Eignung für das mobile technische System geprüft werden können, ob sie den Bedingungen des Bauwerks und/oder des mobilen technischen Systems genügen. Unter "Eignung" kann im Zusammenhang mit der Erfindung insbesondere auch Nutzbarkeit, Ausführbarkeit, Durchführbarkeit, Benutzbarkeit, Anwendbarkeit, Tauglichkeit, Einsetzbarkeit, Geeignetheit, Befahrbarkeit, oder Einsatzfähigkeit verstanden werden. Insbesondere kann die Prüfung einer Route, ob sie für ein mobiles technisches System geeignet ist, für mehr als einen vorgegebenen Punkt durchgeführt werden. Insbesondere kann für jeden Punkt der Route geprüft werden, ob am entsprechenden Ort im Bauwerk die Randbedingung erfüllt ist.

Eine Prüfung erfolgt beispielsweise anhand eines Abgleichs von Belastungsgrenzen des Bauwerks und einem Gewicht des mobilen technischen Systems an einem vorgegebenen Punkt der Route im Bauwerk. So kann beispielsweise eine Route eines mobilen technischen Systems auf Durchführbarkeit anhand des Bauwerksmodells geprüft werden, bevor die Route befahren wird. Insbesondere können mehr als eine Route für ein mobiles technisches System derart geprüft werden und eine geeignete Route selektiert werden.

In einer vorteilhaften Ausführungsform des computerimplementierten Verfahrens kann abhängig vom Ergebnis der Prüfung
- die Route oder zumindest Teile der Route für das mobile technische System freigegeben und/oder
- eine Warnmeldung ausgegeben und/oder
- das mobile technische System angehalten und/oder
- eine Planung einer alternativen Route veranlasst und/oder
- eine alternative Route ausgegeben werden.

Insbesondere können Regeln und/oder Vorgaben und/oder Unsicherheitsbereiche und/oder Gefahrenbereiche bezogen auf eine transportierte Ware definiert werden, anhand derer das Ergebnis der Prüfung eingestuft werden kann. Beispielsweise kann eine Umplanung der Route oder eines Teils der Route veranlasst werden, indem eine Rückmeldung an eine gekoppelte Pfadplanungssoftware übermittelt wird, die eine alternative Planung der Route veranlasst. Beispielsweise kann eine Prüfung ergeben, dass lediglich ein langsames Befahren einer Route möglich ist, so dass die Route für das mobile technische System mit einer Warnung freigegeben wird. Bei einem negativen Prüfergebnis kann beispielsweise das mobile technische System gestoppt, ausgeschalten, gebremst oder umgelenkt werden.

In einer weiteren vorteilhaften Ausführungsform des computerimplementierten Verfahrens können das mobile technische System und ein Verwaltungssystem des Bauwerks über eine Kommunikationsverbindung gekoppelt sein und es können Daten über die Kommunikationsverbindung ausgetauscht werden.

Es ist ein Vorteil der Erfindung, dass ein Verwaltungssystem des Bauwerks, wie z.B. ein Gebäudemanagementsystem, mit dem mobilen technischen System derart gekoppelt sein kann, dass Daten ausgetauscht werden können. Das Verwaltungssystem des Bauwerks kann somit insbesondere direkt mit einer Steuereinheit des mobilen technischen Systems über eine drahtlose oder drahtgebundene Verbindung gekoppelt sein.

In einer weiteren vorteilhaften Ausführungsform des computerimplementierten Verfahrens können aktuelle Umgebungsdaten im Bauwerk von einem Sensor erfasst und die aktuellen Umgebungsdaten an das Verwaltungssystem des Bauwerks übermittelt und die Umgebungsdaten mit Bauwerksdaten verifiziert und/oder beim Prüfen der Route berücksichtigt werden.

Ein Sensor kann beispielsweise an oder im Bauwerk oder am mobilen technischen System angebracht sein. Beispielsweise können mittels eines Laserscans aktuelle Umgebungsdaten im Bauwerk erfasst werden. Umgebungsdaten können beispielsweise Messdaten von unterschiedlichen Sensoren, wie z.B. Temperatursensoren, Dehnungssensoren, Rauchmeldern oder Lastsensoren, die im oder am Bauwerk installiert sein können, umfassen. Die aktuellen Umgebungsdaten können im Zusammenhang mit der Erfindung insbesondere als zusätzliche Bedingungen für die Pfadvalidierung gesehen werden, wie z.B. aktuelle Temperaturdaten für einen Kühltransport. Beispielsweise kann somit eine Route für ein mobiles technisches System in nahezu Echtzeit auf Eignung geprüft werden. Vorzugsweise können die Umgebungsdaten kontinuierlich oder zu vorgegebenen Messzeitpunkten genommen, mit vorgegebenen Bauwerksdaten verglichen, somit verifiziert, und zur Prüfung der Route genutzt werden.

In einer weiteren vorteilhaften Ausführungsform des computerimplementierten Verfahrens können Daten vom mobilen technischen System von einem Sensor erfasst werden und es können diese Daten des mobilen technischen Systems an das Verwaltungssystem übermittelt und die Daten des mobilen technischen Systems beim Prüfen der Route berücksichtigt werden.

Der mindestens eine Sensor kann insbesondere am mobilen technischen System installiert oder mit diesem gekoppelt sein. Der Sensor kann auch im Bauwerk installiert sein und das mobile technische System derart überwachen. Die Sensordaten über das mobile technische System können beispielsweise Betriebsdaten, Bewegungsdaten und/oder Standortdaten umfassen. Vorzugsweise können anhand dieser Sensordaten die Parameterdaten des mobilen technischen Systems aktualisiert werden, wie z.B. durch eine durchgehende Messung des Gesamtgewichts eines Transportsystems. Anhand der aktuellen Sensordaten des mobilen technischen Systems kann der Pfad für das System in Echtzeit verifiziert werden. Es ist auch möglich, dass mittels eines mit dem mobilen technischen System gekoppelten Sensors dynamische, d.h. zeitlich variable, Daten des Bauwerks erfasst und dem Verwaltungssystem des Bauwerks übermittelt und für die Prüfung einer Route genutzt werden.

In einer weiteren vorteilhaften Ausführungsform des computerimplementierten Verfahrens kann das Prüfen der Route im Verwaltungssystem des Bauwerks oder auf dem mobilen technischen System durchgeführt werden und das Ergebnis der Prüfung kann dem Verwaltungssystem des Bauwerks und/oder vom mobilen technischen System übermittelt und von diesem ausgegeben werden.

Für ein autonomes mobiles technisches System, wie z.B. ein autonomes mobiles System, kann die Prüfung auf Eignung einer Route vorzugsweise direkt auf dem System durchgeführt werden. Für eine Flotte von ähnlichen mobilen technischen Systemen kann eine Routenvalidierung vorteilhafter Weise zentral vom Veraltungssystem des Bauwerks durchgeführt werden. Für ein von einem Menschen geführten mobilen technischen System kann die Überprüfung einer Route vorzugsweise auf dem mobilen technischen System direkt durchgeführt werden, wobei das Prüfergebnis lokal als Nachricht, z.B. als Warnsignal, ausgegeben werden kann.

In einer weiteren vorteilhaften Ausführungsform des computerimplementierten Verfahrens kann aus einem nicht-computergestützten Modell des Bauwerks ein computergestütztes räumliches Modell des Bauwerks generiert und dieses bereitgestellt werden.

Es können insbesondere ältere Baupläne oder Architekturzeichnungen in computergestützte Modelle des Bauwerks konvertiert werden.

Gemäß einem weiteren Aspekt betrifft die Erfindung eine Vorrichtung zum Prüfen einer Route in einem Bauwerk für ein mobiles technisches System, umfassend:
- ein Eingabemodul zum Einlesen eines computergestützten räumlichen Modells des Bauwerks, das Bauwerksdaten umfasst, einer Route (W) für das mobile technische System im Bauwerk und von Parametern des mobilen technischen Systems,
- ein Ableitungsmodul zum Ableiten einer Randbedingung für die Route abhängig von den Parametern,
- ein Prüfmodul zum Prüfen für einen vorgegebenen Punkt der Route anhand des Modells des Bauwerks, die Bauwerksdaten die Randbedingung am vorgegebenen Punkt der Route erfüllen,
- ein Ausgabemodul zum Ausgeben des Ergebnisses der Prüfung.

Die Vorrichtung und/oder die Module der Vorrichtung können insbesondere als Hardware- und/oder Softwaremodule ausgestaltet sein.

In einer vorteilhaften Ausführungsform kann die Vorrichtung mit einem Verwaltungssystem eines Bauwerks und/oder mit dem mobilen technischen System gekoppelt sein.

Insbesondere kann die Vorrichtung als Teil des Verwaltungssystems des Bauwerks verstanden werden und/oder direkt mit einer Steuereinheit des mobilen technischen Systems gekoppelt sein.

In einer vorteilhaften Ausführungsform kann die Vorrichtung derart ausgestaltet sein, Schritte eines erfindungsgemäßen computerimplementierten Verfahrens durchzuführen.

Die Vorrichtung kann insbesondere mindestens einen Prozessor umfassen, der zumindest einen Schritt eines erfindungsgemäßen computerimplementierten Verfahrens durchführt.

Gemäß einem weiteren Aspekt betrifft die Erfindung ein Verwaltungssystem eines Bauwerks, wobei das Verwaltungssystem eine Vorrichtung gemäß der Erfindung umfasst.

Ein Verwaltungssystem eines Bauwerks kann insbesondere mit dem Bauwerk gekoppelt sein.

In einer vorteilhaften Ausführungsform kann das Verwaltungssystem mit mindestens einem Sensor und/oder mit dem mobilen technischen System über eine Kommunikationsverbindung gekoppelt sein und derart ausgestaltet sein, die Schritte eines erfindungsgemäßen Verfahrens durchzuführen.

Des Weiteren betrifft die Erfindung ein Computerprogrammprodukt, das direkt in einen programmierbaren Computer ladbar ist, umfassend Programmcodeteile, die dazu geeignet sind, die Schritte eines erfindungsgemäßen Verfahrens durchzuführen und einen computerlesbaren Datenträger, auf dem das Computerprogrammprodukt gespeichert ist.

Insbesondere kann ein erfindungsgemäßes Computerprogrammprodukt von einem Netzwerkdienst, einem Computersystem, einem Serversystem, einem verteilten Computersystem, einem cloudbasierten Rechnersystem und/oder virtuellen Rechnersystem bereitgestellt werden. Die Bereitstellung kann beispielsweise als Download in Form eines Programmdatenblocks und/oder Befehlsdatenblocks, vorzugsweise als Datei, insbesondere als Downloaddatei, des vollständigen Computerprogrammprodukts erfolgen. Ein solches Computerprogrammprodukt wird beispielsweise unter Verwendung einer Bereitstellungsvorrichtung, insbesondere in Form eines computerlesbaren Datenträgers, eingelesen und führt die Programmbefehle aus, sodass das erfindungsgemäße Verfahren auf einem Computer zur Ausführung gebracht wird.

Die nachfolgenden Ausführungsbeispiele können, sofern nicht anders angegeben oder bereits angegeben, zumindest einen Prozessor und/oder eine Speichereinheit aufweisen, um das Verfahren zu implementieren oder auszuführen.

Ausführungsbeispiele des erfindungsgemäßen Verfahrens, der erfindungsgemäßen Vorrichtung und des erfindungsgemäßen Verwaltungssystems sind in den Zeichnungen beispielhaft dargestellt und werden anhand der nachfolgenden Beschreibung näher erläutert. Es zeigen:
Fig. 1: ein Ablaufdiagramm eines erfindungsgemäßen Verfahrens;
Fig. 2: eine schematische Darstellung eines erfindungsgemäßen Verfahrens;
Fig. 3: eine weitere schematische Darstellung eines erfindungsgemäßen Verfahrens;
Fig. 4: eine schematische Darstellung eines erfindungsgemäßen Verfahrens; und
Fig. 5: eine schematische Darstellung einer erfindungsgemäßen Vorrichtung und eines erfindungsgemäßen Verwaltungssystems.

Einander entsprechende Teile sind in allen Figuren mit den gleichen Bezugszeichen versehen.

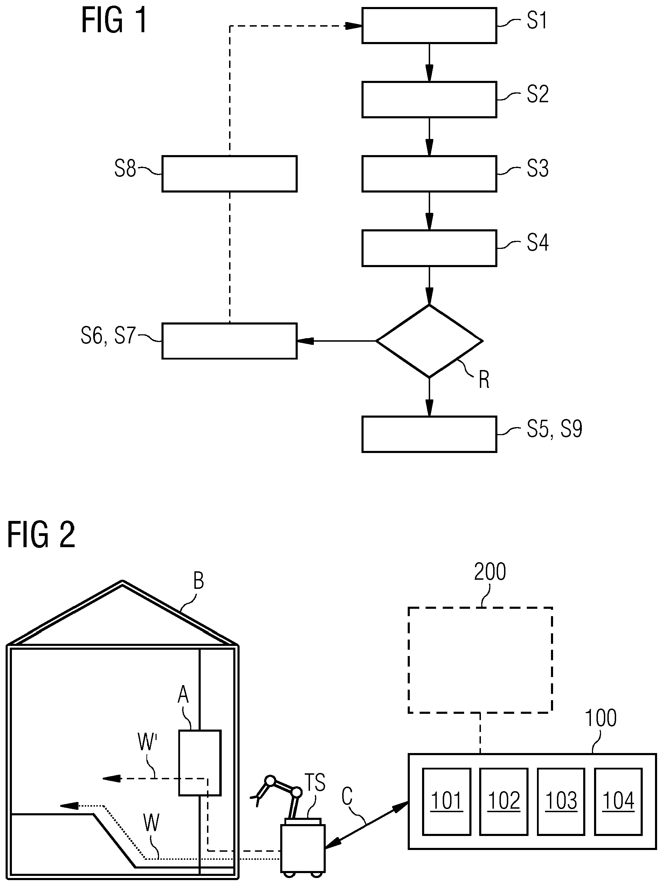

Figur 1 zeigt ein Ablaufdiagramm eines erfindungsgemäßen Verfahrens zum computergestützten Prüfen, insbesondere Prüfen auf Eignung, einer Route für ein mobiles technisches System in einem Bauwerk.

Im Schritt S1 wird ein computergestütztes räumliches Modell des Bauwerks, wie z.B. ein dreidimensionales Simulationsmodell, Angaben zu einer Route im Bauwerk für das mobile technische System und Paramater des mobilen technischen Systems eingelesen. Beispielsweise werden diese Informationen als Daten von einer Datenbank oder Speichereinheit eingelesen. Die

Route kann insbesondere von einem Nutzer vorgegeben und/oder mittels einer geeigneten Pfadplanungssoftware ermittelt und bereitgestellt werden. Das Bauwerksmodell umfasst vorzugsweise physikalische und/oder technische und/oder funktionale Eigenschaften des Bauwerks. Nicht-computergestützte Modelle des Bauwerks, wie z.B. Architekturzeichnungen, können in ein computergestütztes Modell des Bauwerks konvertiert werden, wobei insbesondere physikalische und/oder technische und/oder funktionale Bauwerksdaten des Bauwerks erfasst und in einem Simulationsmodell modelliert werden.

Im Schritt S2 können anhand der Parameter des mobilen technischen Systems Randbedingungen für die Route im Bauwerk abgeleitet werden. Unter "ableiten" kann beispielsweise "ermitteln", "berechnen", "erlangen", "bestimmen", "einschränken", "herleiten", "folgern", "schlussfolgern", "erschließen", "rückschließen", oder ähnliches verstanden werden. Beispielsweise können anhand von Maßangaben oder Sicherheitsinformationen, die dem mobilen technischen System zugeordnet sind, Anforderungen bestimmt werden, welche zum Befahren der Route erfüllt sein müssen. Die Parameter können vorzugsweise spezifische Merkmale des mobilen technischen Systems umfassen, wie z.B. Gewicht, Größe des Wendekreises, Sicherheitsbestimmungen oder Informationen über transportierte Ware, so dass Randbedingungen beispielsweise Last-, Größen-, oder Sicherheitsbeschränkungen umfassen. Damit eine Route für ein mobiles technisches System validiert werden kann, müssen die Bauwerksdaten die Randbedingungen entlang der vorgegebenen Ortspunkte der Route erfüllen.

Im Schritt S3 kann anhand des räumlichen Modells des Bauwerks und abhängig von den Parametern des mobilen technischen Systems jeder vorgegebene Ortspunkt der Route auf eine Eignung für das mobile technische System überprüft werden. Die Prüfung kann beispielsweise einen Vergleich der Randbedingung mit entsprechenden Bauwerksdaten an einem vorgegebenen Ortspunkt umfassen, wie z.B. ein Höhenvergleich einer Deckenhöhe des Bauwerks mit den Abmaßen des mobilen technischen Systems.

Beispielsweise kann derart überprüft werden, ob eine vorgegebene Route, oder mindestens ein Teil der Route an vorgegebenen Ortspunkten der Route, für das mobile technische System geeignet ist, d.h. ob die Bauwerksdaten an dem jeweiligen Ortspunkt den Randbedingungen des mobilen technischen Systems genügen und somit ein Befahren der Route erlauben. Für die Prüfung wird eine Ortsinformation des Bauwerksmodells mit einer Ortsinformation der Route genutzt. Die Randbedingungen für die Route sind insbesondere technischer und/oder physikalischer und/oder funktioneller Natur und werden von den Parametern des mobilen technischen Systems abgeleitet.

Insbesondere kann anhand des Bauwerksmodells eine Simulation der Route im Bauwerk durchgeführt werden und damit die Eignung der Route für das mobile technische System überprüft werden. Die Überprüfung kann beispielsweise anhand vorgegebener Regeln erfolgen.

Es kann folglich explizit für das mobile technische System eine vorgegebene Route im Bauwerk verifiziert werden, indem insbesondere physikalische und/oder technische Eigenschaften des Bauwerks in Betracht gezogen werden.

Im Schritt S4 wird das Ergebnis der Prüfung der Route an das mobile technische System und/oder an das Verwaltungssystem des Bauwerks ausgegeben. Das Ergebnis der Prüfung der Route kann beispielsweise ergeben, dass die Route für das mobile technische System im Bauwerk geeignet ist oder nur unter bestimmten Bedingungen oder nicht geeignet ist.

Die Prüfung der Route kann direkt auf einem Prozessor auf dem mobilen technischen System erfolgen. Alternativ kann die Prüfung auch von einem Verwaltungssystem des Bauwerks durchgeführt werden, wobei dafür insbesondere Parameter des mobilen technischen Systems an das Verwaltungssystem übermittelt werden.

Weitere Schritte des Verfahrens erfolgen abhängig vom Prüfergebnis R. Beispielsweise kann eine Route für ein mobiles technisches System für geeignet befunden und freigegeben werden, Schritt S5. Nach einer Freigabe der Route kann die Route vom mobilen technischen System befahren bzw. ausgeführt werden. Beispielsweise kann die Freigabe der Route an ein Steuergerät des mobilen technischen Systems übermittelt werden.

Bei einem negativen Prüfergebnis, d.h. wenn die Route oder mindestens ein Teil der Route für nicht geeignet für das mobile technische System befunden wird, kann keine Freigabe des Pfades erfolgen und/oder es kann eine Warnmeldung ausgegeben, Schritt S6, und/oder das mobile technische System angehalten werden, Schritt S7. Zusätzlich kann bei einem negativen Prüfergebnis, eine Planung einer alternativen Route veranlasst werden, Schritt S8. Diese alternative Route kann nachfolgend gemäß der Erfindung anhand des Bauwerksmodells und abhängig von den Parametern des mobilen technischen Systems geprüft werden, ob alle erforderlichen Randbedingungen für das Befahren der Route erfüllt sind, Schritt S1 bis S4. Bei positivem Prüfergebnis für die alternative Route kann diese an das mobile technische System und/oder an das Verwaltungssystem des Bauwerks übermittelt und vom mobilen technischen System ausgeführt werden, Schritt S9.

Figur 2 zeigt ein Ausführungsbeispiel eines erfindungsgemäßen Verfahrens. Es ist schematisch ein Bauwerk B gezeigt, in welchem eine Route W für ein mobiles technisches System TS vorgegeben wird. Das mobile technische System TS kann beispielsweise ein mobiler Roboter sein, der im Bauwerk B einer bestimmten Route W entlang in ein nächstes Stockwerk fahren soll. Die Route W kann beispielsweise mittels eines Pfadplanungsalgorithmus geplant sein. Um zu prüfen, ob die Route für den mobilen Roboter TS geeignet ist, z.B. ob eine Rampe einem Gesamtgewicht des mobilen Roboters TS standhält, wird erfindungsgemäß mittels eines Modells des Bauwerks die Route simuliert und validiert. Anhand mindestens einem Parameter des mobilen Roboters, z.B. das Gesamtgewicht, wird mindestens eine Randbedingung für die vorgegebene Route bestimmt, wie z.B. einen Mindestwert für die Belastbarkeit der Rampe. Anhand des Bauwerksmodells kann an jedem Punkt der Route überprüft werden, ob die Bauwerksdaten an dem gleichen Punkt die Randbedingung erfüllen.

Dazu wird an eine erfindungsgemäße Vorrichtung 100, die ein Eingabemodul 101, ein Ableitungsmodul 102, ein Prüfmodul 103 und ein Ausgabemodul 104, umfasst, das Modell des Bauwerks, die Route W und Parameter des mobilen Roboters TS übergeben. Die Module der Vorrichtung 100 sind vorteilhaft miteinander über Kommunikationsverbindungen verbunden. Die Vorrichtung 100 kann beispielsweise als Software ausgestaltet sein und auf einem Prozessor ausgeführt werden. Ein Nutzer oder Käufer eines mobilen technischen Systems TS kann damit eine geplante Route System vorab überprüfen, ob diese für das mobile technische System geeignet ist. Des Weiteren kann ein Lieferant eines mobilen technischen Systems TS vorab überprüfen, ob ein mobiles Transportsystem eine Route W in einem Bauwerk B tatsächlich befahren kann und/oder ob eine transportierte Ware auf der vorgegebenen Route W gemäß Sicherheitsbestimmungen oder Liefervorschriften tatsächlich ausgeliefert werden kann.

Die Vorrichtung 100 ist derart eingerichtet, Schritte des erfindungsgemäßen Verfahrens, wie beispielhaft in Figur 1 dargestellt, durchzuführen. Die Vorrichtung 100 kann über eine drahtlose Kommunikationsverbindung C direkt mit dem mobilen Roboter TS verbunden sein, so dass das Prüfergebnis direkt an eine Steuereinheit des mobilen Roboters TS übermittelt werden kann. Die Vorrichtung 100 kann insbesondere mit einem Verwaltungssystem 200 des Bauwerks B gekoppelt sein und/oder in dieses integriert sein (nicht dargestellt). Beispielsweise kann das Modell des Bauwerks vom Verwaltungssystem 200 bereitgestellt werden.

Die Prüfung der Route W kann beispielsweise ergeben, dass diese nicht für den mobilen Roboter TS geeignet ist, z.B. aufgrund eines zulässigen Gesamtgewichts und/oder aufgrund von Sicherheitsbedingungen. So kann beispielsweise die Vorrichtung 100 und/oder das Verwaltungssystem 200 mit einem Pfadplanungsmodul (nicht dargestellt), das eine Pfadplanungssoftware umfasst, gekoppelt sein, womit eine alternative Route W' geplant werden kann. In Figur 2 ist eine alternative Route W' über einen Aufzug A dargestellt. Wenn die alternative Route W' mittels der Vorrichtung 100 positiv validiert wird, kann diese Route W' stattdessen für den mobilen Roboter TS freigegeben und ausgeführt werden.

Des Weiteren kann mittels des erfindungsgemäßen computerimplementierten Verfahrens eine optimale Route aus einer Vielzahl an Routen für ein mobiles technisches System TS ermittelt werden, wobei für eine jeweilige Route die von den Parametern des mobilen technischen Systems abhängigen Randbedingungen mit den Bauwerksdaten entlang der jeweiligen Route abgeglichen werden.

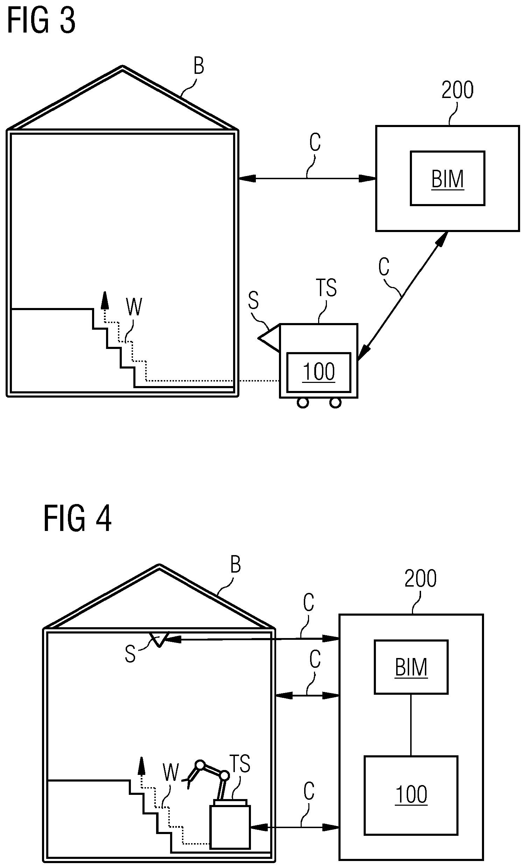

Figur 3 zeigt schematisch ein weiteres Ausführungsbeispiel des erfindungsgemäßen computerimplementierten Verfahrens. Als mobiles technisches System TS ist beispielhaft ein mobiles Transportgerät gezeigt, welches eine Vorrichtung 100 gemäß der Erfindung umfasst. Das Transportgerät TS und/oder die Vorrichtung 100 können mit einem Verwaltungssystem 200 des Bauwerks B über eine drahtlose oder drahtgebundene Kommunikationsverbindung C gekoppelt sein. Das Verwaltungssystem 200 ist mit dem Bauwerk B gekoppelt und kann unter anderem das computergestützte räumliche Modell des Bauwerks BIM verwalten und dieses der Vorrichtung 100 zum Einlesen bereitstellen.

Das Transportsystem TS kann von einer Bedienperson oder autonom gesteuert werden. Die für das Transportsystem TS vorgegebene Route W kann physikalisch validiert werden, indem in der Vorrichtung 100 die Route W anhand des Bauwerksmodells BIM und abhängig von den Randbedingungen, die durch die Parameter des Transportsystems TS gegeben sind, geprüft wird. Zusätzlich können mittels mindestens eines Sensors S aktuelle Standortdaten oder Umgebungsdaten des Transportsystems TS erfasst und bei der Routenüberprüfung genutzt werden. Beispielsweise kann das Transportsystem TS temperaturempfindliche Ware transportieren, so dass eine Randbedingung für die Route eine Maximaltemperatur sein kann, welche nicht überschritten werden darf.

Mittels mindestens eines Umgebungssensors, z.B. ein Temperatur- oder Feuchtigkeitssensor oder ein Radar-/Ultraschallsensor zur Überprüfung eines Durchgangs, kann eine aktuelle Umgebungsmessung im Bauwerk B an mindestens einem vorgegebenen Punkt der Route durchgeführt und bei der Prüfung der Route berücksichtigt werden.

Abhängig vom Ergebnis der Routenprüfung kann die Route für das Transportsystem TS freigegeben werden. Bei einem negativen Prüfergebnis kann beispielsweise eine Warnmeldung, wie z.B. ein Warnsignal für eine Bedienperson, ausgegeben werden. Bei einem autonomen Transportgerät TS kann die Vorrichtung 100 auch direkt mit einer Steuereinheit des Transportgeräts verbunden sein, so dass das autonome Transportgerät TS direkt angehalten oder abgebremst oder umgelenkt werden kann.

In Figur 4 ist ein weiteres Ausführungsbeispiel der Erfindung gezeigt. Ein Verwaltungssystem 200 eines Bauwerks B kann eine Vorrichtung 100 umfassen, d.h. die Vorrichtung 100 kann zum Beispiel als Software im Verwaltungssystem 200 integriert sein. Des Weiteren kann im Bauwerk B mindestens ein Sensor S installiert sein, der direkt mit dem Verwaltungssystem 200 gekoppelt ist. Der Sensor S kann beispielsweise ein Rauchmelder sein, der kontinuierlich einen Teil des Bauwerks B überwacht und die entsprechenden aktuellen Umgebungsdaten im Bauwerk an das Verwaltungssystem 200 übermittelt. So können bei einer Prüfung einer Route W für ein mobiles technisches System TS bei einem Brandfall die aktuellen Umgebungsdaten berücksichtigt werden und beispielsweise bei einem negativen Prüfungsergebnis eine Umplanung der Route veranlasst werden.

Das Verwaltungssystem 200 kann die aktuellen Umgebungsdaten an die Vorrichtung 100 übermitteln, so dass dort anhand des Modells des Bauwerks BIM die Route W auf ihre Durchführbarkeit überprüft werden kann. Des Weiteren können im Modell des Bauwerks BIM zusätzliche Anforderungen des Bauwerks, wie z.B. Fluchtwege, definiert sein, die bei der Überprüfung der Route W im Brandfall berücksichtigt werden sollen.

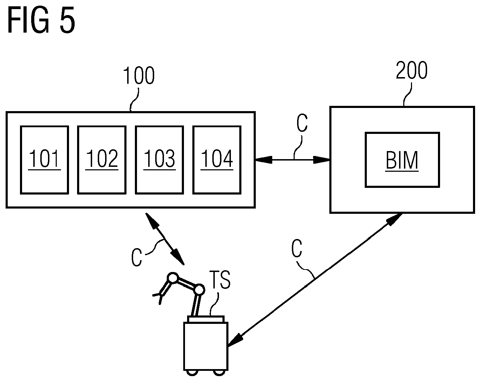

Figur 5 zeigt in Blockdarstellung eine erfindungsgemäße Vorrichtung 100, die mit einem erfindungsgemäßen Verwaltungssystem 200 und einem mobilen technischen System TS gekoppelt ist. Die Kopplung kann beispielsweise jeweils über eine drahtlose oder drahtgebundene Kommunikationsverbindung C oder über ein Kommunikationsnetzwerk eingerichtet sein.

Die erfindungsgemäße Vorrichtung 100 umfasst ein Eingabemodul 101 zum Einlesen eines Bauwerksmodells BIM, einer Route im Bauwerk für das mobile technische System TS und von Parametern des mobilen technischen Systems TS. Das Eingabemodul 101 kann beispielsweise mit einer Speichereinheit oder Datenbank verbunden sein und von dort die für die Prüfung der Route relevanten Daten abrufen. Das Bauwerksmodell BIM kann auch vom Verwaltungssystem 200 bereitgestellt werden. Anhand der Parameter des mobilen technischen Systems TS wird im Ableitungsmodul 102 mindestens eine Randbedingung für die Route abgeleitet.

Die Vorrichtung 100 umfasst des Weiteren ein Prüfmodul 103 zum Prüfen der Route auf Eignung anhand des Bauwerksmodells BIM und abhängig von den für das mobile technische System spezifischen Randbedingungen. Dem Prüfmodul 103 können beispielsweise Regeln oder Prüfvorschriften übermittelt werden anhand derer die Prüfung der Route erfolgen kann.

Das Ergebnis der Prüfung kann über das Ausgabemodul 104 der Vorrichtung 100 an das Verwaltungssystem 200 und/oder an das mobile technische System TS ausgegeben werden.

Aufgrund der Kopplung des Verwaltungssystems 200, der Vorrichtung 100, des mobilen technischen Systems TS, und vorzugsweise Sensoren in oder am Bauwerk und/oder mobilen technischen System, können vorgegebene Routen für das mobile technische System in Echtzeit überprüft und gegebenenfalls umgeplant werden.

## Patentansprüche

1. Computerimplementiertes Verfahren zum Prüfen einer vorgegebenen, mittels eines Pfadplanungsalgorithmus geplanten Route in einem Bauwerk (B) für ein mobiles technisches System (TS), mit den Verfahrensschritten:
- Einlesen (S1) eines computergestützten räumlichen Modells (BIM) des Bauwerks, das Bauwerksdaten umfasst, einer vorgegeben, mittels eines Pfadplanungsalgorithmus geplanten Route (W) für das mobile technische System (TS) im Bauwerk (B) und Parameter des mobilen technischen Systems (TS),
- Ableiten (S2) einer Randbedingung für die Route (W) abhängig von den Parametern,
- Prüfen für einen vorgegebenen Punkt der Route (W) anhand des Modells des Bauwerks (BIM), ob die Bauwerksdaten die Randbedingung am vorgegebenen Punkt der Route (W) erfüllen (S3), wobei für die Prüfung eine Ortsinformation des Modells des Bauwerks mit einer Ortsinformation der Route genutzt wird und wobei aktuelle Daten vom mobilen technischen System (TS) von einem Sensor (S) erfasst und diese aktuellen Daten des mobilen technischen Systems (TS) an ein Verwaltungssystem (200) übermittelt und die Daten des mobilen technischen Systems beim Prüfen der Route (W) berücksichtigt werden
und
- Ausgeben eines Ergebnisses der Prüfung (S4),wobei bei einem positiven Prüfergebnis die Route oder zumindest Teile der Route für das mobile technische System (TS) freigegeben und die Freigabe der Route an ein Steuergerät des mobilen technischen Systems übermittelt wird (S5), wobei nach der Freigabe der Route die Route vom mobilen technischen System ausgeführt wird,
oder das mobile technische System (TS) bei einem negativen Prüfergebnis angehalten (S7) wird.

2. Computerimplementiertes Verfahren nach Anspruch 1, wobei abhängig vom Ergebnis der Prüfung
- eine Warnmeldung ausgegeben (S6) und/oder
- eine Planung einer alternativen Route (W') veranlasst (S8) und/oder
- eine alternative Route (W') ausgegeben wird (S9).

3. Computerimplementiertes Verfahren nach einem der vorhergehenden Ansprüche, wobei das mobile technische System (TS) und ein Verwaltungssystem (200) des Bauwerks über eine Kommunikationsverbindung (C) gekoppelt sind und Daten über die Kommunikationsverbindung (C) ausgetauscht werden.

4. Computerimplementiertes Verfahren nach einem der vorhergehenden Ansprüche, wobei aktuelle Umgebungsdaten im Bauwerk von einem Sensor (S) erfasst und die aktuellen Umgebungsdaten an das Verwaltungssystem (200) des Bauwerks übermittelt und die Umgebungsdaten mit Bauwerksdaten verifiziert und/oder beim Prüfen der Route (W) berücksichtigt werden.

5. Computerimplementiertes Verfahren nach einem der vorhergehenden Ansprüche, wobei
- das Prüfen der Route im Verwaltungssystem (200) des Bauwerks oder auf dem mobilen technischen System (TS) durchgeführt wird
und
- das Ergebnis der Prüfung dem Verwaltungssystem (200) des Bauwerks und/oder vom mobilen technischen System (TS) übermittelt und von diesem ausgegeben wird.

6. Computerimplementiertes Verfahren nach einem der vorhergehenden Ansprüche, wobei aus einem nichtcomputergestützten Modell des Bauwerks ein computergestütztes räumliches Modell (BIM) des Bauwerks generiert wird und dieses bereitgestellt wird.

7. Vorrichtung (100) zum Prüfen einer vorgegebenen, mittels eines Pfadplanungsalgorithmus geplanten Route in einem Bauwerk (B) für ein mobiles technisches System (TS), umfassend:
- ein Eingabemodul (101) zum Einlesen eines computergestützten räumlichen Modells (BIM) des Bauwerks, das Bauwerksdaten umfasst, einer vorgegebenen, mittels eines Pfadplanungsalgorithmus geplanten Route (W) für das mobile technische System (TS) im Bauwerk (B) und von Parametern des mobilen technischen Systems (TS),
- ein Ableitungsmodul (102) zum Ableiten einer Randbedingung für die Route (W) abhängig von den Parametern,
- ein Prüfmodul (103) zum Prüfen für einen vorgegebenen Punkt der Route (W) anhand des Modells des Bauwerks (BIM), ob die Bauwerksdaten die Randbedingung am vorgegebenen Punkt der Route (W) erfüllen, wobei aktuelle Daten vom mobilen technischen System (TS) von einem Sensor (S) erfasst und diese aktuellen Daten des mobilen technischen Systems (TS) an ein Verwaltungssystem (200) übermittelt und die Daten des mobilen technischen Systems beim Prüfen der Route (W) berücksichtigt werden,
- ein Ausgabemodul (104) zum Ausgeben des Ergebnisses der Prüfung, wobei bei einem positiven Prüfergebnis die Route oder zumindest Teile der Route für das mobile technische System (TS) freigegeben und die Freigabe der Route an ein Steuergerät des mobilen technischen Systems übermittelt wird (S5), wobei nach der Freigabe der Route die Route vom mobilen technischen System ausgeführt wird,
oder das mobile technische System (TS) bei einem negativen Prüfergebnis angehalten (S7) wird.

8. Vorrichtung (100) nach Anspruch 7, wobei die Vorrichtung (100) mit einem Verwaltungssystem (200) eines Bauwerks (B) und/oder mit dem mobilen technischen System (TS) gekoppelt ist.

9. Vorrichtung (100) nach Anspruch 7 oder 8, die derart ausgestaltet ist, die Schritte eines computerimplementierten Verfahrens nach einem der Ansprüche 1 bis 6 durchzuführen.

10. Verwaltungssystem (200) eines Bauwerks (B), wobei das Verwaltungssystem (200) eine Vorrichtung (100) nach einem der Ansprüche 8 bis 10 umfasst.

11. Verwaltungssystem (200) eines Bauwerks (B) nach Anspruch 10, wobei das Verwaltungssystem (200) mit mindestens einem Sensor (S) und/oder mit dem mobilen technischen System (TS) über eine Kommunikationsverbindung (C) gekoppelt ist und derart ausgestaltet ist, die Schritte eines Verfahrens nach einem der Ansprüche 1 bis 6 durchzuführen.

12. Computerprogrammprodukt, das direkt in einen programmierbaren Computer ladbar ist, umfassend Programmcodeteile, die dazu geeignet sind, Schritte eines Verfahrens nach einem der Ansprüche 1 bis 6 durchzuführen.

13. Computerlesbarer Datenträger, auf dem das Computerprogrammprodukt nach Anspruch 12 gespeichert ist.

## Claims

1. Computer-implemented method for checking a predefined route that is planned by means of a path planning algorithm in a building (B) for a mobile technical system (TS), having the method steps of:
- reading in (S1) a computer-aided spatial model (BIM) of the building, comprising building data, a predefined route (W) that is planned by means of a path planning algorithm for the mobile technical system (TS) in the building (B) and parameters of the mobile technical system (TS),
- deriving (S2) a boundary condition for the route (W) depending on the parameters,
- checking, for a predefined point of the route (W) on the basis of the model of the building (BIM), whether the building data satisfy (S3) the boundary condition at the predefined point of the route (W), wherein positional information of the building model with positional information of the route is utilized for the check, and wherein current data of the mobile technical system (TS) are detected by a sensor (S) and these current data of the mobile technical system (TS) are communicated to a management system (200) and the data of the mobile technical system are taken into account when checking the route (W),
and
- outputting a result of the check (S4), wherein, in the case of a positive checking result, the route or at least parts of the route for the mobile technical system (TS) are released and the release of the route is communicated to a control unit of the mobile technical system (S5), wherein the route is executed by the mobile technical system after the route has been released,
or the mobile technical system (TS) is stopped (S7) in the case of a negative checking result.

2. Computer-implemented method according to Claim 1, wherein depending on the result of the check
- a warning message is output (S6) and/or
- planning of an alternative route (W') is instigated (S8) and/or
- an alternative route (W') is output (S9).

3. Computer-implemented method according to either of the preceding claims, wherein the mobile technical system (TS) and a management system (200) of the building are coupled via a communication connection (C) and data are exchanged via the communication connection (C).

4. Computer-implemented method according to any of the preceding claims, wherein current ambient data in the building are detected by a sensor (S) and the current ambient data are communicated to the management system (200) of the building and the ambient data are verified with building data and/or taken into account when checking the route (W).

5. Computer-implemented method according to any of the preceding claims, wherein
- checking of the route is carried out in the management system (200) of the building or on the mobile technical system (TS)
and
- the result of the check is communicated to the management system (200) of the building and/or by the mobile technical system (TS) and is output thereby.

6. Computer-implemented method according to any of the preceding claims, wherein a computer-aided spatial model (BIM) of the building is generated from a non-computer-aided model of the building and is provided.

7. Device (100) for checking a predefined route that is planned by means of a path planning algorithm in a building (B) for a mobile technical system (TS), comprising:
- an input module (101) for reading in a computer-aided spatial model (BIM) of the building, comprising building data, a predefined route (W) that is planned by means of a path planning algorithm for the mobile technical system (TS) in the building (B) and parameters of the mobile technical system (TS),
- a deriving module (102) for deriving a boundary condition for the route (W) depending on the parameters,
- a checking module (103) for checking, for a predefined point of the route (W) on the basis of the model of the building (BIM), whether the building data satisfy the boundary condition at the predefined point of the route (W), wherein current data of the mobile technical system (TS) are detected by a sensor (S) and these current data of the mobile technical system (TS) are communicated to a management system (200) and the data of the mobile technical system are taken into account when checking the route (W),
- an output module (104) for outputting the result of the check, wherein, in the case of a positive checking result, the route or at least parts of the route for the mobile technical system (TS) are released and the release of the route is communicated to a control unit of the mobile technical system (S5), wherein the route is executed by the mobile technical system after the route has been released,
or the mobile technical system (TS) is stopped (S7) in the case of a negative checking result.

8. Device (100) according to Claim 7, wherein the device (100) is coupled to a management system (200) of a building (B) and/or to the mobile technical system (TS).

9. Device (100) according to Claim 7 or 8, which is configured so as to carry out the steps of a computer-implemented method according to any of Claims 1 to 6.

10. Management system (200) of a building (B), wherein the management system (200) comprises a device (100) according to any of Claims 8 to 10.

11. Management system (200) of a building (B) according to Claim 10, wherein the management system (200) is coupled to at least one sensor (S) and/or to the mobile technical system (TS) via a communication connection (C) and is configured so as to carry out the steps of a method according to any of Claims 1 to 6.

12. Computer program product which is loadable directly into a programmable computer, comprising program code parts suitable for carrying out steps of a method according to any of Claims 1 to 6.

13. Computer-readable data carrier on which the computer program product according to Claim 12 is stored.

## Revendications

1. Procédé assisté par ordinateur de contrôle d'une route, donnée à l'avance et planifiée au moyen d'un algorithme de planification de chemin, d'un système (TS) technique mobile dans un bâtiment (B), comprenant les stades de procédé :
- entrée (S1) d'un modèle (BIM) spatial assisté par ordinateur du bâtiment, qui comprend des données du bâtiment, d'une route (W), donnée à l'avance et planifiée au moyen d'un algorithme de planification de chemin, du système (TS) technique mobile dans le bâtiment (B) et de paramètres du système (TS) technique mobile,
- déduction (S2) d'une condition aux limites de la route (W) en fonction des paramètres,
- contrôle (S3), pour un point donné à l'avance de la route (W) à l'aide du modèle du bâtiment (BIM), si les données du bâtiment satisfont la condition aux limites en un point donné à l'avance de la route (W), dans lequel, pour le contrôle, on utilise une information de localisation du modèle du bâtiment ayant une information de localisation de la route et dans lequel on détecte des données en cours du système (TS) technique mobile par un capteur (S) et on transmet ces données en cours du système (TS) technique mobile à un système (200) de gestion et on prend en compte les données du système technique mobile lors du contrôle de la route (W) et
- émission (S4) d'un résultat du contrôle, dans lequel, si le résultat du contrôle est positif, on valide la route ou au moins des parties de la route du système (TS) technique mobile et on transmet (S5) la validation de la route à un appareil de commande du système technique mobile, dans lequel, après la validation de la route, la route est empruntée par le système technique mobile,
ou on arrête (S7) le système (TS) technique mobile, si le résultat du contrôle est négatif.

2. Procédé mis en œuvre par ordinateur suivant la revendication 1, dans lequel, en fonction du résultat du contrôle
- on émet (S6) un message d'alerte et/ou
- on provoque (S8) une planification d'une autre route (W') et/ou
- on donne (S9) une autre route (W').

3. Procédé suivant l'une des revendications précédentes, dans lequel le système (TS) technique mobile et un système (200) de gestion du bâtiment sont reliés par une liaison (C) de communication et on échange des données par la liaison (C) de communication.

4. Procédé suivant l'une des revendications précédentes, dans lequel on détecte des données d'environnement en cours dans le bâtiment par un capteur (S) et on transmet les données d'environnement en cours au système (200) de gestion du bâtiment et on vérifie les données d'environnement par des données de bâtiment et/ou on en tient compte lors du contrôle de la route (W).

5. Procédé suivant l'une des revendications précédentes, dans lequel
- on effectue le contrôle de la route dans le système (200) de gestion du bâtiment ou sur le système (TS) technique mobile
et
- on transmet le résultat du contrôle au système (200) de gestion du bâtiment et/ou par le système (TS) technique mobile et on le donne par celui-ci.

6. Procédé suivant l'une des revendications précédentes, dans lequel on crée, à partir d'un modèle du bâtiment, qui n'est pas assisté par ordinateur, un modèle (BIM) spatial du bâtiment assisté par ordinateur et on le met à disposition.

7. Installation (100) de contrôle d'une route, planifiée au moyen d'un algorithme de planification de chemin, d'un système (TS) technique mobile dans un bâtiment (B), comprenant :
- un module (101) d'entrée, pour l'entrée d'un modèle (BIM) spatial du bâtiment assisté par ordinateur, qui comprend des données du bâtiment, d'une route (W), planifiée au moyen d'un algorithme de planification de chemin du système (TS) technique mobile dans le bâtiment (B) et par des paramètres du système (TS) technique mobile,
- un module (102) de déduction, pour la déduction d'une condition aux limites de la route (W) en fonction des paramètres,
- un module (103) de contrôle, pour le contrôle, pour un point donné à l'avance de la route (W) à l'aide du modèle du bâtiment (BIM) du point de savoir si les données du bâtiment satisfont la condition aux limites au point donné à l'avance de la route (W), dans lequel, pour le contrôle, on utilise une information de localisation du modèle du bâtiment ayant une information de localisation de la route et dans lequel on détecte des données en cours du système (TS) technique mobile par un capteur (S) et on transmet ces données en cours du système (TS) technique à un système (200) de gestion et on prend en compte les données du système technique mobile lors du contrôle de la route (W),
- un module (104) de sortie, pour donner le résultat du contrôle, dans lequel, si le résultat du contrôle est positif, on valide la route ou au moins des parties de la route du système (TS) technique mobile et on transmet (S5) la validation de la route à un appareil de commande du système technique mobile, dans lequel, après la validation de la route, la route est empruntée par le système technique mobile,
ou on arrête (S7) le système (TS) technique mobile, si le résultat du contrôle est négatif.

8. Installation (100) suivant la revendication 7, dans laquelle l'installation (100) est reliée à un système (200) de gestion d'un bâtiment (B) et/ou au système (TS) technique mobile.

9. Installation (100) suivant la revendication 7 ou 8, qui est conformée de manière à effectuer les stades d'un procédé assisté par ordinateur suivant l'une des revendications 1 à 6.

10. Système (200) de gestion d'un bâtiment (B), le système (200) de gestion comprenant une installation (100) suivant l'une des revendications 8 à 10.

11. Système (200) de gestion d'un bâtiment (B) suivant la revendication 10, dans lequel le système (200) de gestion est relié à au moins un capteur (S) et/ou au système (TS) technique mobile par une liaison (C) de communication et est conformé de manière à effectuer les stades d'un procédé suivant l'une des revendications 1 à 6.

12. Produit de programme d'ordinateur, qui peut être chargé directement dans un ordinateur programmable, comportant des parties de code de programme, qui sont propres à effectuer les stades d'un procédé suivant l'une des revendications 1 à 6.

13. Support de données, déchiffrable par ordinateur, sur lequel le produit de programme d'ordinateur suivant la revendication 12 est mis en mémoire.
